# EUROPÄISCHE PATENTANMELDUNG

(11) **EP 3 205 682 A1**
(43) Veröffentlichungstag der Anmeldung: **16.08.2017**
(21) Anmeldenummer: 16155767.3
(22) Anmeldetag: 15.02.2016
(51) Int. Cl.: C08G 59/56

(54) **HÄRTER FÜR EMISSIONSARME EPOXIDHARZ-ZUSAMMENSETZUNGEN**

(71) Anmelder: Sika Technology AG, 6340 Baar (CH)
(72) Erfinder: Kasemi, Edis, 8046 Zürich (CH); Kramer, Andreas, 8006 Zürich (CH); Stadelmann, Ursula, 8046 Zürich (CH); Burckhardt, Urs, 8049 Zürich (CH)
(74) Vertreter: Sika Patent Attorneys

(57) **Zusammenfassung**

Die vorliegende Erfindung betrifft einen Härter für Epoxidharz-Zusammensetzungen enthaltend mindestens ein Amin der Formel (I) und mindestens ein Amin der Formel (II).

Der Härter ist geruchsarm, niedrigviskos, von geringer Toxizität und weist eine geringe Neigung zu Carbamatisierung und eine hohe Reaktivität gegenüber Epoxidharzen auf. Er ermöglicht geruchs- und emissionsarme Epoxidharz-Produkte, welche gut verarbeitbar sind und auch bei tiefen Temperaturen und hoher Luftfeuchtigkeit schnell und störungsfrei zu qualitativ hochstehenden Kunststoffe von hoher Härte und ebenmässiger, nichtklebriger Oberfläche mit hohem Glanz aushärten.

## Beschreibung

### Technisches Gebiet

Die Erfindung betrifft das Gebiet der Härter für Epoxidharze, Epoxidharz-Zusammensetzungen, sowie deren Verwendung, insbesondere als Beschichtung, Belag oder Anstrich.

### Stand der Technik

Für Beschichtungszwecke geeignete Epoxidharz-Zusammensetzungen sollen eine möglichst niedrige Viskosität aufweisen, damit sie bei Umgebungstemperatur gut verarbeitbar sind. Weiterhin sollen sie möglichst schnell und störungsfrei aushärten, auch bei feucht-kalten Bedingungen, und dabei eine ebenmässige Oberfläche ohne Trübungen, Flecken oder Krater ausbilden. Schliesslich soll die ausgehärtete Beschichtung eine hohe Härte bei geringer Sprödigkeit besitzen, um mechanischer Beanspruchung möglichst gut zu widerstehen. Für optisch anspruchsvolle Anwendungen, beispielsweise Deckbeläge von Fussböden, soll eine Beschichtung ausserdem einen hohen Glanzgrad und eine geringe Neigung zum Vergilben unter Lichteinfluss aufweisen.

Um diese Eigenschaften zu erreichen, werden in Epoxidharz-Beschichtungen nach dem Stand der Technik typischerweise Härter eingesetzt, welche auf hochviskosen Addukten von Polyaminen mit Diepoxiden oder auf hochviskosen Mannich-Basen beruhen. Mannich-Basen sind Kondensationsprodukte aus Phenolen mit Aldehyden, insbesondere Formaldehyd, und Polyaminen. Besonders beliebt sind die auch als Phenalkamine bezeichneten Mannich-Basen von Cardanol, einem aus dem ÖI der Cashewnuss-Schale gewonnenen Alkenylphenol-Gemisch. Mannich-Basen weisen den Vorteil auf, dass sie mit Epoxidharzen zu einer sehr schnellen Reaktion fähig sind und dadurch Epoxidharz-Produkte ermöglichen, die auch bei niedrigen Umgebungstemperaturen, beispielsweise bei 8 °C, schnell Festigkeit aufbauen und nichtklebrig werden und somit schon bald nach der Applikation belastbar sind.

Für ihren Einsatz in Epoxidharz-Beschichtungen sind solche Mannich-Basen für sich allein zu dickflüssig. Zur Senkung der Viskosität können ihnen niedrigmolekulare Amine zugegeben werden. Solche Amine sind aber meist geruchsintensiv, stark haut- und augenreizend sowie sensibilisierend und führen verstärkt zu Blushing-Effekten. Weiterhin können Verdünner wie Benzylalkohol, Glykole oder Alkylphenole eingesetzt werden. Solche Verdünner verbessern die Verarbeitbarkeit und die Oberflächenqualität der Beschichtung, indem sie das Auftreten von Blushing-Effekten vermindern. Sie aber sind gegenüber Epoxidharzen bei Raumtemperatur unreaktiv und werden daher bei der Aushärtung nicht in die Harzmatrix eingebaut. Heutzutage werden aber zunehmend emissionsarme Produkte gewünscht, die nach der Aushärtung einen geringen Gehalt von durch Verdampfungs- oder Diffusionsprozesse freisetzbaren Substanzen aufweisen. Für emissionsarme Epoxidharz-Beschichtungen können solche Verdünner deshalb nur in geringer Menge oder gar nicht verwendet werden. Weiterhin neigen Mannich-Basen zu Problemen mit Vergilbung, was für Beschichtunsanwendungen oft problematisch ist. Phenalkamine mit einem hohen Gehalt an freien Alkylphenolen erreichen zudem nur eine niedrige Endhärte.

US 6,262,148 beschreibt Phenalkamine basierend auf Cardanol und MXDA und ihre Verwendung als Härter für Beschichtungen. Die beschriebenen Härter weisen wenig Neigung zu Blushing-Effekten und eine schnelle Aushärtung auf. Sie sind jedoch für eine gute Verarbeitbarkeit in Beschichtungsanwendungen ohne weitere Verdünnung zu hochviskos.

### Darstellung der Erfindung

Aufgabe der Erfindung ist es, einen geruchsarmen, wenig toxischen, niedrigviskosen, schnellen Härter für Epoxidharze zur Verfügung zu stellen, der emissionsarme Produkte ermöglicht, die auch bei verhältnismässig tiefen Temperaturen rasch aushärten und dabei qualitativ hochstehende Filme bzw. Körper mit ebenmässiger, glänzender Oberfläche und hoher Festigkeit bilden und welche insbesondere auch für Beschichtungen, Beläge oder Anstriche geeignet sind.

Diese Aufgabe wird mit einem Härter wie in Anspruch 1 beschrieben gelöst. Der Härter ist geruchsarm, wenig toxisch und niedrigviskos, weist eine geringe Neigung zu Carbamatisierung auf und ist gegenüber Epoxidharzen sehr reaktiv. Er ermöglicht Epoxidharz-Produkte, welche mit wenig oder ganz ohne Lösemittel oder Verdünner auskommen und trotzdem überraschend dünnflüssig sind. Solche Epoxidharz-Produkte sind geruchs- und emissionsarm, sehr gut verarbeitbar und zeigen auch unter ungünstigen Aushärtungsbedingungen kaum Blushing-bedingte Fehler. Dabei härten sie auch bei tiefen Temperaturen wie beispielsweise 8 °C rasch aus und bilden qualitativ hochstehende Kunststoffe von hoher Härte, ebenmässiger nichtklebriger Oberfläche mit hohem Glanz und geringer Neigung zum Vergilben. Überraschenderweise ermöglicht der Härter Epoxidharz-Produkte mit einer höheren Endhärte und als ein Vergleichshärter ohne Amin der Formel (II) oder mit anderen zugesetzten Aminen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze enthaltend
- mindestens ein Amin der Formel (I), 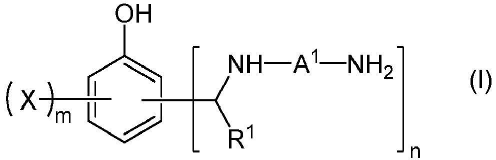 wobei
   A¹ für einen Alkylen-Rest mit 2 bis 15 C-Atomen, welcher gegebenenfalls Cycloalkyl- oder Aryl-Ringe aufweist und gegebenenfalls Ether-Sauerstoff oder Amin-Stickstoff enthält und welcher nicht 1,2-Propylen ist, steht,
   R¹ für einen Wasserstoff-Rest oder Alkyl-Rest mit 1 bis 8 C-Atomen oder Phenyl-Rest steht,
   X für gleiche oder verschiedene Reste ausgewählt aus der Gruppe bestehend aus Hydroxyl, Alkyl, Alkenyl und Alkoxy mit jeweils 1 bis 18 C-Atomen, welche gegebenenfalls Ether- oder Hydroxyl-Sauerstoff oder Amin-Stickstoff enthalten, steht,
   m für 0 oder 1 oder 2 steht, und
   n für 1 oder 2 oder 3 steht; und
- mindestens ein Amin der Formel (II), 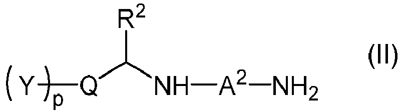 wobei
   A² für einen Alkylen-Rest ausgewählt aus 1,2-Ethylen und 1,2-Propylen steht,
   R² für einen Wasserstoff- oder Methyl- oder Phenyl-Rest steht,
   Q für einen fünf-, sechs- oder siebengliedrigen, im Ring gegebenenfalls ein Sauerstoff-, Schwefel- oder Stickstoffatom aufweisenden Cycloalkyl- oder Aryl-Rest mit 4 bis 7 C-Atomen steht,
   Y für gleiche oder verschiedene Reste ausgewählt aus der Gruppe bestehend aus Alkyl, Alkoxy und Dialkylamino mit jeweils 1 bis 18 C-Atomen steht, und
   p für 0 oder 1 oder 2 oder 3 steht.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Als "Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.

Als "Molekulargewicht" wird die molare Masse (in Gramm pro Mol) eines Moleküls bezeichnet. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Der Härter für Epoxidharze enthält mindestens ein Amin der Formel (I).

Bevorzugt steht A¹ für gleiche oder verschiedene Reste ausgewählt aus der Gruppe bestehend aus 1,2-Ethylen, 1,3-Propylen, 2-Methyl-1,5-pentylen, 1,6-Hexylen, 2,2(4),4-Trimethyl-1,6-hexylen, 1,3-Cyclohexylen-bis(methylen), 1,3-Phenylen-bis(methylen), (1,5,5-Trimethylcyclohexan-1-yl)methan-1,3, 3-Aza-1,5-pentylen, 3,6-Diaza-1,8-octylen, 3,6,9-Triaza-1,11-undecylen, 4-Aza-1,7-heptylen, 3-Aza-1,6-hexylen, 4,7-Diaza-1,10-decylen und 7-Aza-1,13-tridecylen.

Besonders bevorzugte Reste A¹ sind 1,3-Phenylen-bis(methylen), 3-Aza-1,5-pentylen oder 3,6-Diaza-1,8-octylen.

Ganz besonders bevorzugt ist 1,3-Phenylen-bis(methylen).

Bevorzugt steht R¹ für einen Wasserstoff-Rest oder für einen Alkyl-Rest mit 1 bis 4 C-Atomen, insbesondere Methyl, Ethyl oder Isopropyl, oder für einen Phenyl-Rest.

Besonders bevorzugt steht R¹ für einen Wasserstoff-Rest oder für einen Methyl-Rest.

Am meisten bevorzugt steht R¹ für einen Wasserstoff-Rest.

Bevorzugt steht X für gleiche oder verschiedene Reste ausgewählt aus der Gruppe bestehend aus Hydroxyl, Alkyl, Alkenyl und Alkoxy mit jeweils 1 bis 15 C-Atomen, welche gegebenenfalls Ether-Sauerstoff, Hydroxyl-Sauerstoff oder Amin-Stickstoff enthalten.

Besonders bevorzugt ist X ausgewählt aus der Gruppe bestehend aus Hydroxy, Methyl, Methoxy, tert.Butyl, Nonyl, Dodecyl, Pentadeca-8-enyl, Pentadeca-8,11-dienyl, Pentadeca-8,11,14-trienyl, N,N-Dimethylaminomethyl, N,N-Diethyl-aminomethyl, N-Methyl-N-ethylaminomethyl, N-Methyl-N-butylaminomethyl, N,N-Bis(hydroxyethyl)aminomethyl, N-Methyl-N-hydroxyethylaminomethyl, N-Ethyl-N-hydroxyethylaminomethyl, N-Butyl-N-hydroxyethylaminomethyl, N-Pyrrolidinylmethyl, N-Piperidinylmethyl, N-Morpholinylmethyl, (3-(N,N-Dimethylamino)propyl)aminomethyl oder (3-(3-(N,N-Dimethylamino)propyl)aminopropyl)aminomethyl, insbesondere für Pentadeca-8-enyl oder Pentadeca-8,11-dienyl oder Pentadeca-8,11,14-trienyl.

### Bevorzugt steht m für 0 oder 1.

In einer besonders bevorzugten Ausführungsform stehen m für 1 und X für Pentadeca-8-enyl oder Pentadeca-8,11-dienyl oder Pentadeca-8,11,14-trienyl, wobei der Rest X in 3-Stellung und die übrigen Reste in 2- und/oder 4-und/oder 6-Stellung bezogen auf das phenolische OH stehen.

Solche Amine der Formel (I) werden auch als Phenalkamine bezeichnet. Sie sind in kommerziell erhältlichen Härtern für Epoxidharze enthalten, wie beispielsweise Cardolite^{®} NC-540, NC-557, NC-558, NC-566, Lite 2002, GX-6019, GX-6013, NX-4943, NX-5607 oder NX-5608 (von Cardolite) oder Aradur^{®} 3440, 3441, 3442, 3460 oder 3462 (von Huntsman).

Bei einem ganz besonders bevorzugten Amin der Formel (I) stehen m für 1, X für Pentadeca-8-enyl oder Pentadeca-8,11-dienyl oder Pentadeca-8,11,14-trienyl, R¹ für einen Wasserstoff-Rest und A¹ ist ausgewählt aus 1,3-Phenylen-bis(methylen), 3-Aza-1,5-pentylen und 3,6-Diaza-1,8-octylen.

Die bevorzugten Amine der Formel (I) zeichnen sich durch eine besonders gute Herstellbarkeit, eine besonders niedrige Viskosität und besonders gute Eigenschaften für die beschriebenen Verwendungen aus.

Ein geeignetes Amin der Formel (I) ist erhältlich aus der Umsetzung von mindestens einem primären Diamin der Formel (III), mindestens einem Aldehyd der Formel (IV) und mindestens einer Phenol-Verbindung der Formel (V) unter Abspaltung von Wasser.

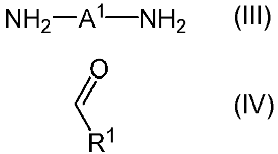

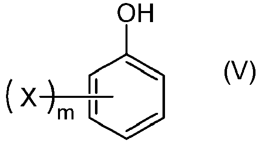

In den Formeln (III), (IV) und (V) weisen A¹, R¹, X und m die bereits genannten Bedeutungen auf.

Bevorzugt steht dabei m für 0 oder 1, insbesondere für 1.

Bei dieser Umsetzung handelt es sich um eine Mannich-Reaktion. Die Reaktionsbedingungen werden vorteilhaft so gewählt, dass nur eine der beiden Aminogruppen des Diamins der Formel (III) alkyliert wird und somit möglichst wenig Mehrkernverbindungen entstehen.

Aus einer solchen Mannich-Reaktion entsteht ein Reaktionsprodukt, das hauptsächlich Amine der Formel (I) enthält, welche in 2- und/oder 4- und/oder 6-Stellung in Bezug auf das phenolische OH substituiert sind und verschiedene Werte für n aufweisen. Typischerweise enthält das Reaktionsprodukt weiterhin einen gewissen Anteil an nicht umgesetzten Ausgangsverbindungen, d.h. Diamin der Formel (III) und Phenol-Verbindung der Formel (V), sowie zusätzlich einen gewissen Anteil an mehrkernigen Mannich-Basen aus der doppelten oder mehrfachen Alkylierung von Diaminen der Formel (III).

Das Diamin der Formel (III) kann in einem molaren Überschuss in Bezug auf die Phenol-Verbindung der Formel (V) eingesetzt werden, bevorzugt in einem Molverhältnis von mindestens 2/1, insbesondere mindestens 3/1. Auf diese Weise wird ein Reaktionsprodukt erhalten, welches hauptsächlich Amine der Formel (I) mit n=2 oder 3 enthält und einen niedrigen Gehalt an unreagierter Phenol-Verbindung aufweist.

Das Diamin der Formel (III) kann aber auch unterstöchiometrisch in Bezug auf die Phenol-Verbindung eingesetzt werden. Dabei wird ein vergleichsweise niedrigviskoses Reaktionsprodukt erhalten, welches hauptsächlich Amine der Formel (I) mit n=1 sowie eine gewisse Menge an unreagierter Phenol-Verbindung enthält. Dieses Vorgehen ist vor allem für Cardanol als Phenol-Verbindung bevorzugt, da Cardanol weniger toxisch ist als andere typischerweise eingesetzte Phenol-Verbindungen, wie Phenol, tert.Butylphenol oder Nonylphenol.

Das Diamin der Formel (III) kann auch in Form einer Mischung aus zwei oder mehreren Diaminen der Formel (III) eingesetzt werden, wodurch das erhaltene Reaktionsprodukt Amine der Formel (I) mit verschiedenen Resten A¹ enthält.

Als Aldehyd der Formel (IV) geeignet ist insbesondere Formaldehyd, Acetaldehyd, Propionaldehyd, Isobutyraldehyd, 2-Ethylhexanal oder Benzaldehyd. Bevorzugt ist Formaldehyd.

Als primäres Diamin der Formel (III) geeignet ist ein primäres aliphatisches Diamin mit 2 bis 15 C-Atomen, welches gegebenenfalls mindestens einen Cycloalkyl- oder Aryl-Ring aufweist und gegebenenfalls Ether-Sauerstoff oder Amin-Stickstoff enthält, mit Ausnahme von 1,2-Propylendiamin.

Bevorzugt ist das primäre Diamin der Formel (III) ausgewählt aus der Gruppe bestehend aus 1,2-Ethylendiamin, 1,3-Propylendiamin, 2-Methyl-1,5-pentandiamin, 1,6-Hexandiamin, 2,2(4),4-Trimethyl-1,6-hexyandiamin, 1,3-Bis(amino-methyl)cyclohexan, 1,3-Bis(aminomethyl)benzol, 3-Aminomethyl-3,5,5-trime-thylcyclohexylamin, Diethylentriamin (DETA), Triethylentetramin (TETA), Tetraethylenpentamin (TEPA), Dipropylentriamin (DPTA), 3-(2-Aminoethyl)aminopropylamin (N3-Amin), N,N'-Bis(3-aminopropyl)ethylendiamin (N4-Amin) und Bis(hexamethylen)triamin (BHMT).

Besonders bevorzugt sind 1,3-Bis(aminomethyl)benzol, DETA oder TETA. Ganz besonders bevorzugt ist 1,3-Bis(aminomethyl)benzol.

Als Phenol-Verbindung der Formel (V) geeignet ist insbesondere Phenol, o-Kresol, m-Kresol, p-Kresol, 4-tert.Butylphenol, 4-Nonylphenol, 4-Dodecylphenol, Cardanol (besteht hauptsächlich aus 3-(Pentadeca-8-enyl)phenol, 3-(Pentadeca-8,11-dienyl)phenol und 3-(Pentadeca-8,11,14-trienyl)phenol), 2,3-Dimethylphenol (o-Xylenol), 2,4-Dimethylphenol (m-Xylenol), 2,5-Dimethylphenol (p-Xylenol), 2,6-Dimethylphenol, 3,4-Dimethylphenol, 3,5-Dimethylphenol, 2-Methoxyphenol (Guajacol), 3-Methoxyphenol, 4-Methoxyphenol, 2,6-Dimethoxyphenol, Brenzkatechin, Resorcin, Hydrochinon oder Pyrogallol.

Bevorzugt ist Phenol, o-Kresol, m-Kresol, p-Kresol, 4-tert.Butylphenol, 4-Nonylphenol, 4-Dodecylphenol, Cardanol, o-Xylenol, m-Xylenol, p-Xylenol, Guajacol, 3-Methoxyphenol, 4-Methoxyphenol, Resorcin oder Hydrochinon. Besonders bevorzugt ist Phenol, o-Kresol, m-Kresol, p-Kresol, Cardanol oder Resorcin, insbesondere Phenol oder Cardanol.

Ganz besonders bevorzugt als Phenol-Verbindung der Formel (V) ist Cardanol. Die damit erhaltenen Reaktionsprodukte sind frei von Phenol oder kleinen Alkylphenolen wie Kresol, tert.Butylphenol oder Nonylphenol. Sie weisen typischerweise einen gewissen Gehalt an nicht umgesetztem Cardanol auf.

Bevorzugte Reaktionsprodukte aus der beschriebenen Mannich-Reaktion enthalten insbesondere Amine der Formel (I a), 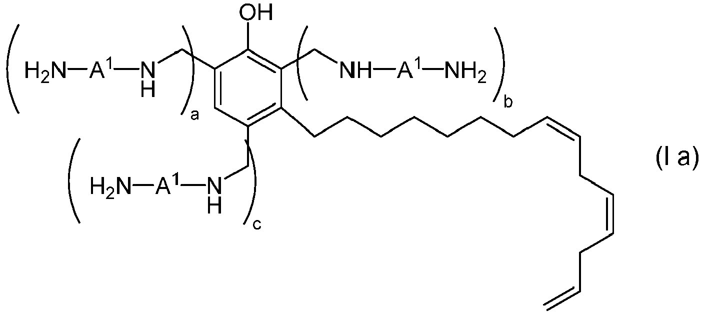 wobei
a für 0 oder 1, b für 0 oder 1 und c für 0 oder 1 steht, wobei mindestens ein Index a oder b oder c für 1 steht,
und A¹ die bereits beschriebenen Bedeutungen aufweist.

Amine der Formel (Ia) werden auch als Phenalkamine bezeichnet.

Ein bevorzugtes Amin der Formel (Ia) enthält als A¹ jeweils einen 1,3-Phenylen-bis(methylen)-Rest.

Ein geeignetes Amin der Formel (I) ist weiterhin erhältlich aus der Umsetzung von mindestens einem primären Diamin der Formel (III) und mindestens einer Mannich-Base der Formel (VI) unter Abspaltung von Amin der Formel R³-NH-R⁴.

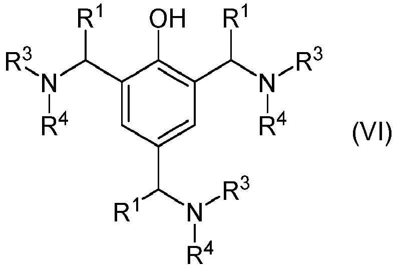

In der Formel (VI) weist R¹ die bereits genannten Bedeutungen auf, und R³ und R⁴ stehen jeweils für gleiche oder verschiedene Alkyl-, Cycloalkyl-, oder Aralkyl-Reste mit 1 bis 4 C-Atomen, welche gegebenenfalls Ether-Sauerstoff oder Amin-Stickstoff enthalten, oder zusammen für einen Alkylen-Rest mit 4 bis 8 C-Atomen, welcher gegebenenfalls Ether-Sauerstoff oder Amin-Stickstoff enthält.

Bevorzugt stehen R³ und R⁴ jeweils für Methyl oder Ethyl oder Butyl oder Isobutyl, insbesondere jeweils für Methyl.

Bei dieser Umsetzung handelt es sich um eine Umaminierung. Dabei wird das freigesetzte Amin der Formel R³-NH-R⁴ bevorzugt während der Umsetzung aus der Reaktionsmischung entfernt, insbesondere destillativ. Die Reaktionsbedingungen bei der Umaminierung werden vorteilhaft so gewählt, dass nur eine der beiden Aminogruppen des Diamins der Formel (III) alkyliert wird und somit möglichst wenig mehrkernige Nebenprodukte entstehen.

Bei der Umaminierung entsteht ein Reaktionsprodukt, das typischerweise Anteile von Aminen der Formel (I) enthält, bei welchen X für 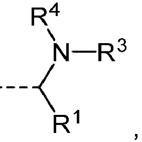 insbesondere für N,N-Dimethylaminomethyl, steht.

Als Mannich-Base der Formel (VI) bevorzugt ist 2,4,6-Tris(N,N-dimethylaminomethyl)phenol. Es ist aus kostengünstigen Rohstoffen besonders einfach herstellbar und ist kommerziell in hoher Reinheit verfügbar. Zudem kann das daraus freigesetzte Dimethylamin aufgrund seines relativ tiefen Siedepunkts mittels Destillation besonders gut aus der Reaktionsmischung entfernt werden.

Bevorzugte Reaktionsprodukte aus der beschriebenen Umaminierung enthalten insbesondere Amine der Formel (Ib), 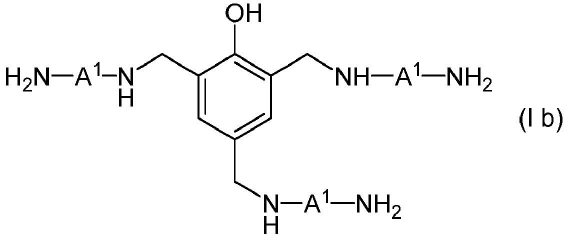 wobei A¹ die bereits genannten Bedeutungen aufweist.

Ein geeignetes Amin der Formel (I) ist weiterhin erhältlich aus der Umsetzung von mindestens einem primären Diamin der Formel (III) mit mindestens einem Aldehyd oder Keton der Formel (VII) und Wasserstoff.

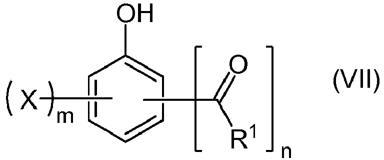

In der Formel (VII) weisen R¹, X, m und n die bereits genannten Bedeutungen auf.
Bevorzugt steht m dabei für 0 oder 1, insbesondere für 0.
Bevorzugt steht n dabei für 1.
X steht dabei bevorzugt für Methyl oder Methoxy oder Hydroxy.

Bei dieser Umsetzung handelt es sich um eine reduktive Alkylierung. Die reduktive Alkylierung kann direkt mit molekularem Wasserstoff oder indirekt durch Wasserstoff-Transfer von anderen Reagentien erfolgen. Bevorzugt wird molekularer Wasserstoff verwendet. Die Reaktionsbedingungen werden vorteilhaft so gewählt, dass nur eine der beiden Aminogruppen des primären Diamins der Formel (III) mit guter Selektivität einfach alkyliert wird und der aromatische Ring nicht hydriert wird. Bevorzugt wird bei einem Wasserstoff-Druck von 5 bis 100 bar, einer Temperatur von 40 bis 120 °C und in Anwesenheit eines geeigneten Katalysators gearbeitet. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Als Aldehyd oder Keton der Formel (VII) geeignet sind insbesondere 2-Hydroxybenzaldehyd (Salicylaldehyd), 3-Hydroxybenzaldehyd, 4-Hydroxybenzaldehyd, 2-Hydroxy-3-methylbenzaldehyd, 2-Hydroxy-5-methylbenzaldehyd, 4-Hydroxy-3,5-dimethylbenzaldehyd, 2-Hydroxy-3-methoxybenzaldehyd (o-Vanillin), 2-Hydroxy-4-methoxybenzaldehyd, 2-Hydroxy-5-methoxybenzaldehyd, 3-Hydroxy-4-methoxybenzaldehyd (Isovanillin), 4-Hydroxy-2-methoxybenzaldehyd, 4-Hydroxy-3-methoxybenzaldehyd (Vanillin), 6-Hydroxy-2,4-dimethoxybenzaldehyd, 2,3-Dihydroxybenzaldehyd, 2,4-Dihydroxybenzaldehyd (β-Resorcinaldehyd), 2,5-Dihydroxybenzaldehyd (Gentisinaldehyd), 3,4-Dihydroxybenzaldehyd, 3,5-Dihydroxybenzaldehyd, 2,3,4-Trihydroxybenzaldehyd, 2'-Hydroxyacetophenon, 3'-Hydroxyacetophenon, 4'-Hydroxyacetophenon, 4'-Hydroxy3'-methoxyacetophenon (Acetovanillon), 4'-Hydroxy-3',5'-dimethoxyacetophenon, 2',4'-Dihydroxyacetophenon (Resacetophenon), 2',5'-Dihydroxyacetophenon (Chinacetophenon), 2',6'-Dihydroxyacetophenon (2-Acetylresorcin), 2',4'-Dihydroxyacetophenon, 4-Hydroxybenzophenon oder 2-Hydroxy-4-methoxy-benzophenon.

Davon bevorzugt ist Salicylaldehyd, 3-Hydroxybenzaldehyd, 4-Hydroxybenzaldehyd, o-Vanillin, Isovanillin, Vanillin, β-Resorcinaldehyd, Gentisinaldehyd, 3,4-Dihydroxybenzaldehyd, 2'-Hydroxyacetophenon, 3'-Hydroxyacetophenon, 4'-Hydroxyacetophenon, Acetovanillon oder Resacetophenon.

Besonders bevorzugt ist Salicylaldehyd oder 2'-Hydroxyacetophenon.

Bevorzugte Reaktionsprodukte aus der beschriebenen reduktiven Alkylierung enthalten insbesondere Amine der Formel (Ic), 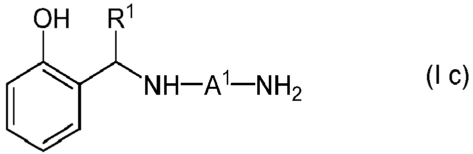 wobei R¹ und A¹ die bereits genannten Bedeutungen aufweisen.

Amine der Formel (Ic) sind gegenüber Epoxidharzen besonders reaktiv, da sie einen verhältnismässig hohen Gehalt an Phenolgruppen aufweisen.

Das Amin der Formel (I) wird somit bevorzugt in Form eines Reaktionsprodukts aus einer Umsetzung ausgewählt aus der Gruppe bestehend aus
(i) Umsetzung von
   - mindestens einem primären Diamin der Formel (III),
   - mindestens einem Aldehyd der Formel (IV)
   - und mindestens einer Phenol-Verbindung der Formel (V)
   unter Abspaltung von Wasser,
(ii) Umsetzung von
   - mindestens einem primären Diamin der Formel (III) und
   - mindestens einer Mannich-Base der Formel (VI)
   unter Abspaltung von Amin der Formel R³-NH-R⁴ und
(iii) Umsetzung von
   - mindestens einem primären Diamin der Formel (III),
   - mindestens einem Aldehyd oder Keton der Formel (VII)
   - und Wasserstoff
   unter Abspaltung von Wasser,
   eingesetzt.

Ein Reaktionsprodukt aus der Umsetzung (i) ("Mannich-Reaktion") weist den Vorteil auf, dass es in einem einfachen und kostengünstigen Verfahren aus einer Vielzahl von technisch zugänglichen Ausgangsverbindungen in breiter struktureller Vielfalt herstellbar ist. Bei der (Mit-)Verwendung von Cardanol als Phenol-Verbindung der Formel (V) ist das Reaktionsprodukt ausserdem weitgehend oder gänzlich frei von niedrigmolekularen, toxischen Phenolen wie Phenol selbst oder Alkylphenolen wie Kresol, tert.Butylphenol oder Nonylphenol.

Ein Reaktionsprodukt aus der Umsetzung (ii) ("Umaminierung") weist den Vorteil auf, dass es frei ist von niedrigmolekularen, toxischen Phenolen wie Phenol selbst oder Alkylphenolen wie Kresol, tert.Butylphenol oder Nonylphenol, und dass es insbesondere bei der Verwendung des kommerziell in hoher Reinheit erhältlichen 2,4,6-Tris(N,N-dimethylaminomethyl)phenols kostengünstig und auf einfache Weise herstellbar ist.

Ein Reaktionsprodukt aus der Umsetzung (iii) ("reduktive Alkylierung") weist den Vorteil auf, dass es besonders rein und besonders niedrigviskos ist, besonders hochreaktive Amine der Formel (I) aufweist und keine niedrigmolekularen, toxischen Phenole wie Phenol selbst oder Alkylphenolen wie Kresol, tert.Butylphenol oder Nonylphenol enthält.

Bevorzugt ist das primäre Diamin der Formel (III) dabei jeweils ausgewählt aus der Gruppe bestehend aus 1,2-Ethylendiamin, 1,3-Propylendiamin, 2-Methyl-1,5-pentandiamin, 1,6-Hexandiamin, 2,2(4),4-Trimethyl-1,6-hexyandiamin, 1,3-Bis(aminomethyl)cyclohexan, 1,3-Bis(aminomethyl)benzol, 3-Aminomethyl-3,5,5-trimethylcyclohexylamin, Diethylentriamin (DETA), Triethylentetramin (TETA), Tetraethylenpentamin (TEPA), Dipropylentriamin (DPTA), 3-(2-Aminoethyl)aminopropylamin (N3-Amin), N,N'-Bis(3-aminopropyl)ethylendiamin (N4-Amin) und Bis(hexamethylen)triamin (BHMT).

Das Amin der Formel (I) ermöglicht Härter für Epoxidharze, welche bei niedrigen Umgebungstemperaturen, beispielsweise bei 8 °C, eine besonders schnelle Aushärtung ermöglichen. Es ist aber ohne effiziente Verdünnung zu hochviskos für viele Epoxidharz-Produkte und neigt zum Vergilben.

Der Härter für Epoxidharze enthält weiterhin mindestens ein Amin der Formel (II).

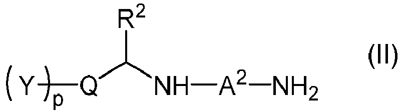

A² steht bevorzugt für 1,2-Propylen. Diese Amine der Formel (II) neigen besonders wenig zum Carbamatisieren und ermöglichen Epoxidharz-Zusammensetzungen mit besonders schönen Oberflächen.

R² steht bevorzugt für einen Wasserstoff-Rest oder für Methyl, insbesondere für einen Wasserstoff-Rest. Diese Amine der Formel (II) sind besonders einfach zugänglich und ermöglichen besonders niedrigviskose Härter und Epoxidharz-Zusammensetzungen.

Bevorzugt steht Q für einen gegebenenfalls mit Y substituierten Phenyl-Rest. Diese Amine ermöglichen eine besonders schnelle Aushärtung und besonders schöne Oberflächen.

Y steht bevorzugt für gleiche oder verschiedene Reste ausgewählt aus der Gruppe bestehend aus Alkyl, Alkoxy und Dialkylamino mit jeweils 1 bis 12, insbesondere 1 bis 4, C-Atomen. Besonders bevorzugt steht Y für Methyl oder für Methoxy oder für Dimethylamino. Ganz besonders bevorzugt steht Y für Methoxy oder für Dimethylamino.

Bevorzugt steht der Rest Y in meta- und/oder para-Stellung. Im Fall von p=1 steht der Rest Y insbesondere in para-Stellung.

p steht bevorzugt für 0 oder 1 oder 2, insbesondere für 0 oder 1. Besonders bevorzugt steht p für 0. Diese Amine ermöglichen besonders niedrigviskose Epoxidharz-Zusammensetzungen.

Für den Fall, dass p für 1 steht, steht Q insbesondere für einen mit Y substituierten Phenyl-Rest und Y steht insbesondere für Methoxy oder für Dimethylamino. Diese Amine ermöglichen Epoxidharz-Zusammensetzungen mit ganz besonders schneller Aushärtung.

Besonders bevorzugt stehen A² für 1,2-Propylen, R² für einen Wasserstoff-Rest, Q für einen Phenyl-Rest und p für 0. Ein solches Amin ermöglicht Epoxidharz-Zusammensetzungen mit einer besonders guten Verarbeitbarkeit, sehr schneller Aushärtung und besonders schönen Oberflächen.

Das Amin der Formel (II) ist bevorzugt ausgewählt aus der Gruppe bestehend aus N-Benzyl-1,2-ethandiamin, N-(4-Methoxybenzyl)-1,2-ethandiamin, N-(4-(Dimethylamino)benzyl)-1,2-ethandiamin, N¹-Benzyl-1 ,2-propandiamin oder N²-Benzyl-1,2-propandiamin oder ein Gemisch dieser Isomeren, N¹-(4-Methoxybenzyl)-1,2-propandiamin oder N²-(4-Methoxybenzyl)-1,2-propandiamin oder ein Gemisch dieser Isomeren, N¹-(4-(Dimethylamino)benzyl)-1,2-propandiamin oder N²-(4-(Dimethylamino)benzyl)-1,2-propandiamin oder ein Gemisch dieser Isomeren.
Davon bevorzugt ist N¹-Benzyl-1,2-propandiamin oder N²-Benzyl-1,2-propandiamin oder ein Gemisch dieser Isomeren, im Folgenden auch als N-Benzyl-1,2-propandiamin bezeichnet.

Die bevorzugten Amine der Formel (II) zeichnen sich durch besonders gute Zugänglichkeit, besonders niedrige Viskosität und gute Eigenschaften in der erfindungsgemässen Verwendung aus, wie insbesondere eine schnelle Aushärtung, hohe Endhärte und kaum Neigung zu Blushing-Effekten.

Das Amin der Formel (II) wird bevorzugt erhalten aus der einfachen Alkylierung von 1,2-Ethylendiamin oder 1,2-Propylendiamin mit einem geeigneten Alkylierungsmittel, beispielsweise einem organischen Halogenid oder einer Carbonylverbindung.

Bevorzugt wird das Amin der Formel (II) durch reduktive Alkylierung von 1,2-Ethylendiamin oder 1,2-Propylendiamin mit einem Aldehyd oder Keton der Formel (VIII) und Wasserstoff hergestellt, 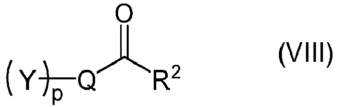 wobei R², Q, Y und p die bereits genannten Bedeutungen aufweisen. Diese Herstellung verläuft besonders selektiv und führt zu Reaktionsprodukten von besonders hoher Reinheit, d.h. hohem Gehalt an Aminen der Formel (II).

Das Amin der Formel (II) wird somit bevorzugt in Form eines Reaktionsprodukts aus der reduktiven Alkylierung von 1,2-Ethylendiamin oder 1,2-Propylendiamin mit mindestens einem Aldehyd oder Keton der Formel (II) und Wasserstoff eingesetzt.
Ein solches Reaktionsprodukt ist auch ohne aufwendige Reinigungsschritte besonders rein, d.h. es enthält einen hohen Gehalt an Amin der Formel (II). Es ist dadurch besonders niedrigviskos und reaktiv und somit besonders geeignet als Bestandteil des beschriebenen Härters.

Besonders bevorzugt wird das Amin der Formel (II) in Form eines Reaktionsprodukts aus der Alkylierung von 1,2-Ethylendiamin oder 1,2-Propylendiamin, insbesondere aus der reduktiven Alkylierung mit einem Aldehyd oder Keton der Formel (VIII) und Wasserstoff eingesetzt. Bevorzugt ist das Reaktionsprodukt mittels Destillation gereinigt. Ein mittels Destillation gereinigtes Reaktionsprodukt ermöglicht besonders schnelle Aushärtungsgeschwindigkeiten und besonders hohe Härten.

Der erfindungsgemässe Härter enthaltend eine Kombination aus Amin der Formel (I) und Amin der Formel (II) ermöglicht Epoxidharz-Produkte mit einer überraschend niedrigen Viskosität, welche somit gute verarbeitbar sind, insbesondere auch als selbstverlaufende Beschichtung, mit einer schnellen Aushärtung, insbesondere auch in der Kälte, und einer überraschend hohen Endhärte, welche kaum Blushing-bedingten Fehlern wie trübe oder klebrige Oberfläche oder reduzierter Endhärte zeigen und nur wenig vergilben.

Der Härter kann neben mindestens einem Amin der Formel (I) und mindestens einem Amin der Formel (II) zusätzlich mindestens ein weiteres Amin, das nicht der Formel (I) oder (II) entspricht, und/oder mindestens einen Beschleuniger enthalten.
Das weitere Amin ist dabei insbesondere kein Edukt oder Nebenprodukt aus der Herstellung des Amins der Formel (I) und/oder des Amins der Formel (II).

Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen. Als Beschleuniger bevorzugt sind Säuren, tertiäre Amine oder Mannich-Basen.
Am meisten bevorzugt ist Salicylsäure oder 2,4,6-Tris(dimethylaminomethyl)-phenol oder eine Kombination davon.

Als weiteres Amin bevorzugt sind Polyamine, welche mindestens zwei, insbesondere mindestens drei, gegenüber Epoxidgruppen reaktive Aminwasserstoffe aufweisen, insbesondere die Folgenden:
- Polyamine mit ein oder zwei sekundären Aminogruppen, insbesondere Produkte aus der reduktiven Alkylierung von primären aliphatischen Polyaminen mit Aldehyden oder Ketonen, welche nicht der Formel (II) entsprechen, wie insbesondere N,N'-Dibenzyl-1,2-ethandiamin, N,N'-Dibenzyl-1,2-propandiamin, N-Benzyl-1,3-bis(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, oder partiell styrolisierte Polyamine wie insbesondere styrolisiertes 1,3-Bis(aminomethyl)benzol (erhältlich als Gaskamine^{®} 240 von Mitsubishi Gas Chemical);
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2-oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA) oder 1,4-Bis(aminomethyl)benzol;
- Ethergruppen-haltige aliphatische primäre Di- oder Triamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylendi- oder -triamine sind Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000, Jeffamine^{®} T-5000, oder entsprechende Amine von BASF oder Nitroil;
- sekundäre Aminogruppen aufweisende Polyamine mit zwei primären aliphatischen Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-aminopropyl)amin oder Tris(3-aminopropyl)amin;
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA, erhältlich als Ethacure^{®} 100 von Albermarle), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid^{®} 100, 125, 140 oder 150 (von Cognis), Aradur^{®} 223, 250 oder 848 (von Huntsman), Euretek^{®} 3607 oder 530 (von Huntsman) oder Beckopox^{®} EH 651, EH 654, EH 655, EH 661 oder EH 663 (von Cytec);
- oder Addukte von Polyaminen mit Epoxiden oder Epoxidharzen, insbesondere Addukte mit Diepoxiden im Molverhältnis von ungefähr 2/1, oder Addukte mit Monoepoxiden im Molverhältnis von ungefähr 1/1, oder Umsetzungsprodukte aus Polyaminen und Epichlorhydrin, insbesondere jenes von 1,3-Bis(aminomethyl)benzol, kommerziell erhältlich als Gaskamine^{®} 328 (von Mitsubishi Gas Chemical).

Es kann vorteilhaft sein, wenn der erfindungsgemässe Härter eine Kombination aus zwei oder mehr weiteren Aminen enthält.

Als weiteres Amin besonders bevorzugt sind Polyamine mit einer primären und einer sekundären Aminogruppe, welche nicht der Formel (II) entsprechen, insbesondere N-Benzyl-1,3-bis(aminomethyl)benzol, N-2-Ethylhexyl-1,3-bis(aminomethyl)benzol oder styrolisiertes 1,3-Bis(aminomethyl)benzol.

Als weiteres Amin besonders bevorzugt sind weiterhin primäre Diamine mit einem Molekulargewicht von mindestens 120 g/mol, insbesondere mindestens 150 g/mol, bevorzugt TMD, H₁₂-MDA, IPDA, 2- oder 4-Methyl-1,3-diamino-cyclohexan oder Mischungen davon, 1,3-Bis(aminomethyl)cyclohexan, 1,4-Bis-(aminomethyl)cyclohexan, NBDA, MXDA oder BHMT, insbesondere TMD, H₁₂-MDA, IPDA, NBDA, oder BHMT

Als weiteres Amin besonders bevorzugt sind weiterhin Ethergruppen-haltige aliphatische primäre Di- oder Triamine, insbesondere Polyoxyalkylendi- oder - triamine mit einem mittleren Molekulargewicht im Bereich von 200 bis 500 g/mol, insbesondere Jeffamine^{®} D-230 oder Jeffamine^{®} T-403 (beide von Huntsman), oder cycloaliphatische Ethergruppen-haltige Diamine aus der Propoxylierung und nachfolgenden Aminierung von 1,4-Dimethylolcyclohexan, insbesondere Jeffamine^{®} RFD-270 (von Huntsman).

Als weiteres Amin besonders bevorzugt sind weiterhin mindestens drei Aminwasserstoffe aufweisende Addukte aus mindestens einem Polyamin mit 2 bis 12 C-Atomen und mindestens einem Epoxid.
Als Epoxid für ein solches Addukt bevorzugt sind Monoepoxide, insbesondere aromatische Monoepoxide, insbesondere Kresylglycidylether, tert.Butylphenylglycidylether oder der Glycidylether von Cardanol. Besonders bevorzugt ist Kresylglycidylether. Als Kresylglycidylether geeignet sind alle isomeren Kresylglycidylether oder Gemische davon, insbesondere kommerziell erhältiche Typen wie insbesondere Araldite^{®} DY-K (von Huntsman), Polypox™ R6 (von Dow), Heloxy™ KR (von Hexion) oder Erisys^{®} GE-10 (von CVC Spec. Chem.) Als Epoxid für ein solches Addukt bevorzugt sind weiterhin Diepoxide, insbesondere aromatische Diepoxide, insbesondere Bisphenol-A- oder Bisphenol-F-oder Bisphenol-A/F-Diglycidylether oder Resorcinol-Diglycidylether, insbesondere kommerziell erhältliche Flüssigharze.
Besonders bevorzugt ist ein mindestens drei Aminwasserstoffe aufweisendes Addukt aus mindestens einem Polyamin mit mindestens einem aromatischen Monoepoxid, welche im Molverhältnis von ca. 1/1 umgesetzt sind. Während der Umsetzung ist das Polyamin insbesondere im Überschuss vorhanden gewesen und nach der Umsetzung mittels Destillation entfernt worden.
Für ein solches Addukt ist das aromatische Monoepoxid bevorzugt ein Kresylglycidylether, insbesondere orto-Kresylglycidylether.
Für ein solches Addukt ist das Polyamin bevorzugt 1,2-Ethylendiamin, 1,2-Propylendiamin, 1,3-Propylendiamin oder MPMD, besonders bevorzugt 1,2-Propylendiamin oder MPMD.

Der Härter kann weiterhin mindestens einen Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol oder Cardanol (aus Cashew-Schalen-Öl, enthaltend als Hauptbestandteile 3-(Pentadeca-8-enyl)phenol, 3-(Pentadeca-8,11-dienyl)phenol und 3-(Pentadeca-8,11,14-trienyl)phenol), erhältlich beispielsweise als Cardolite^{®} NC-700 oder Cardolite^{®} NX-2026 (beide von Cardolite), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide. Bevorzugt sind Benzylalkohol, Dodecylphenol, tert.Butylphenol, styrolisiertes Phenol, ethoxyliertes Phenol oder phenolgruppenhaltige aromatische Kohlenwasserstoffharze, insbesondere die Novares^{®}-Typen LS 500, LX 200, LA 300 oder LA 700 (von Rütgers).

Der Härter enthält bevorzugt keinen oder nur einen geringen Gehalt an Verdünnern, bevorzugt weniger als 25 Gewichts-%, mehr bevorzugt weniger als 15 Gewichts-%, besonders bevorzugt weniger als 10 Gewichts-% und insbesondere weniger als 5 Gewichts-%.

Der Härter kann weitere gegenüber Epoxidgruppen reaktive Substanzen enthalten, beispielsweise Monoamine wie Hexylamin oder Benzylamin, oder Mercaptogruppen aufweisende Verbindungen, insbesondere die Folgenden:
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Ether, erhältlich beispielsweise durch Umsetzung von Polyoxyalkylendi- oder -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Der Härter ist bevorzugt weitgehend frei von Aminen mit einem Molekulargewicht unterhalb von 150 g/mol, insbesondere unterhalb von 120 g/mol. Bevorzugt enthält er weniger als 2 Gewichts-%, insbesondere weniger als 1 Gewichts-%, Amine mit einem Molekulargewicht unterhalb von 150 g/mol, insbesondere unterhalb von 120 g/mol. Ein solcher Härter ist toxikologisch und geruchlich besonders vorteilhaft und ermöglicht Beschichtungen mit besonders schönen Oberflächen.

Der erfindungsgemässe Härter enthält bevorzugt soviel an Amin der Formel (I), dass 15 bis 80%, besonders bevorzugt 20 bis 70%, der gesamten Aminwasserstoffe des Härters vom Amin der Formel (I) stammen.

Der erfindungsgemässe Härter enthält bevorzugt soviel an Amin der Formel (II), dass 20 bis 70%, besonders bevorzugt 30 bis 60%, der gesamten Aminwasserstoffe des Härters vom Amin der Formel (II) stammen.

Ein besonders bevorzugter Härter enthält als weiteres Amin mindestens ein mindestens drei Aminwasserstoffe aufweisendes Addukt aus mindestens einem Polyamin mit 2 bis 12 C-Atomen und mindestens einem Epoxid.
In einem solchen Härter sind das Amin der Formel (I), das Amin der Formel (II), das Addukt und gegebenenfalls weitere Amine in einer solchen Menge vorhanden, dass von den im Härter insgesamt enthaltenen Aminwasserstoffen
15 bis 50 % aus Aminen der Formel (I),
30 bis 60 % aus Aminen der Formel (II),
15 bis 50 % aus mindestens drei Aminwasserstoffe aufweisenden Addukten
und 0 bis 10 % aus weiteren Aminen stammen.
Eine solcher Härter ist geruchsarm, weist eine niedrige Viskosität auf und bildet bei Luftkontakt kaum Trübungen oder Krusten. Gegenüber Epoxidharzen weist er eine hohe Verdünnungswirkung bei besonders guter Verträglichkeit auf. Er ermöglicht somit emissionsarme Epoxidharz-Zusammensetzungen, welche gut verarbeitbar sind, besonders schnell und weitgehend ohne Blushing-Effekte aushärten und dabei Filme von sehr hohem Glanz und hoher Härte bilden.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend einen Härter, welcher mindestens ein Amin der Formel (I) und mindestens ein Amin der Formel (II) umfasst, wie vorgängig beschrieben.
Dabei liegen die Harz- und die Härter-Komponente typischerweise in voneinander getrennten Gebinden vor und sind jede für sich lagerstabil. Sie werden erst unmittelbar vor der Applikation miteinander vermischt, so dass ihre Reaktivgruppen miteinander in Kontakt kommen und die Zusammensetzung aushärtet.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, cyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Phenol-Novolaken enthalten.

Die Harz-Komponente kann einen Reaktivverdünner, insbesondere einen mindestens eine Epoxidgruppe aufweisenden Reaktivverdünner, enthalten. Als Reaktivverdünner geeignet sind insbesondere die Glycidylether von ein- oder mehrwertigen Phenolen oder aliphatischen oder cycloaliphatischen Alkoholen, wie insbesondere die bereits genannten Polyglycidylether von Di- oder Polyolen, oder weiterhin Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀-Alkylglycidylether oder C₁₂-bis C₁₄-Alkylglycidylether. Die Zugabe eines Reaktivverdünners zum Epoxidharz bewirkt eine Reduktion der Viskosität, und/oder eine Reduktion der Glasübergangstemperatur und/oder der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner oder Extender, wie insbesondere die bereits genannten Verdünner;
- Reaktivverdünner, insbesondere Epoxidgruppen aufweisende Reaktivverdünner, wie sie vorgängig erwähnt wurden, epoxidierte natürliche Öle wie Sojaöl, Leinöl oder Palmkernöl, oder Acetoacetatgruppen aufweisende Verbindungen, insbesondere acetoacetylierte Polyole, Butyrolakton, Carbonate, Aldehyde, sowie weiterhin Isocyanate oder Reaktivgruppen-aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere, Sulfonamid-modifizierte Melamine oder gereinigte Montan-Wachse;
- anorganische oder organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und/oder Eisenoxide;
- die vorgenannten Beschleuniger;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht oder UV-Strahlung;
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), ResorcinoldiphosphatOligomer, Tetraphenylresorcinoldiphosphit, Ethylendiamindiphosphat oder Bisphenol-A-bis(diphenylphosphat), Tris(chloroethyl)phosphat, Tris(chloropropyl)phosphat oder Tris(dichloroisopropyl)phosphat, Tris[3-bromo-2,2-bis-(bromomethyl)propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine;
- oberflächenaktive Substanzen, insbesondere Netzmittel, Verlaufsmittel, Entlüftungsmittel oder Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und/oder Beschleuniger, insbesondere Salicylsäure und/oder 2,4,6-Tris(dimethylaminomethyl)phenol.
Bevorzugt enthält die Epoxidharz-Zusammensetzung keinen oder nur einen geringen Gehalt an Verdünnern, bevorzugt maximal 10 Gewichts-%, insbesondere maximal 5 Gewichts-%.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die beiden Komponenten der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Harz- und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.
Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.
Beim Vermischen der Harz- und der Härter-Komponente beginnt die Aushärtung durch chemische Reaktion. Dabei reagieren die Epoxidgruppen mit den Aminwasserstoff tragenden Aminogruppen und gegebenenfalls vorhandenen weiteren gegenüber Epoxidgruppen reaktiven Gruppen unter Ringöffnung zu Aminoalkohol-Einheiten. Weitere Epoxidgruppen reagieren mit sich selbst unter anionischer Polymerisation. Als Ergebnis dieser Reaktionen härtet die Zusammensetzung zu einem vernetzten Kunststoff aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.
Die Aushärtung erfolgt insbesondere bei Umgebungstemperatur. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.
Ein weiterer Gegenstand der Erfindung ist somit eine ausgehärtete Zusammensetzung erhalten aus der Aushärtung einer beschriebenen Epoxidharz-Zusammensetzung.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundmatrix für Faserverbundwerkstoffe (Composites) wie insbesondere CFK oder GFK, oder als Vergussmasse, Dichtstoff, Klebstoff, Belag, Beschichtung, Anstrich, Lack, Versiegelung, Grundierung oder Primer. Insbesondere verwendbar ist sie als Vergussmasse, beispielsweise als Elektrovergussmasse, oder als Klebstoff, insbesondere als Karrosserieklebstoff, Sandwichelementklebstoff, Halbschalenklebstoff für Rotorblätter von Windkraftanlagen, Brückenelementklebstoff oder Verankerungsklebstoff.
Insbesondere verwendbar ist sie weiterhin als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden.
Insbesondere verwendbar ist sie weiterhin als Grundierung, Voranstrich, Haftanstrich oder Korrosionsschutz-Primer.
Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung. Besonders vorteilhaft wird die beschriebene Epoxidharz-Zusammensetzung als Beschichtung verwendet.

Ein weiterer Gegenstand der Erfindung ist dementsprechend eine Beschichtung, enthaltend eine Epoxidharz-Zusammensetzung wie vorgängig beschrieben.
Als Beschichtung werden dabei flächig aufgebrachte Beläge aller Art verstanden, insbesondere Anstriche, Lacke, Versiegelungen, Grundierungen oder Primer, wie vorgängig beschrieben, oder Bodenbeläge oder Schutzbeschichtungen, insbesondere auch solche für schweren Korrosionsschutz. Besonders vorteilhaft wird die beschriebene Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende oder thixotropierte Beschichtung auf überwiegend ebene Flächen oder als Anstrich appliziert wird. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 4'000 mPa·s, bevorzugt im Bereich von 300 bis 2'000 mPa·s, besonders bevorzugt im Bereich von 300 bis 1'500 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl.
Bei der Aushärtung entstehen typischerweise weitgehend klare, glänzende und nichtklebrige Filme von hoher Härte, welche eine gute Haftung zu verschiedensten Substraten aufweisen.

Aus der Anwendung der Epoxidharz-Zusammensetzung entsteht ein Artikel umfassend die ausgehärtete Zusammensetzung aus der Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist geruchs- und emissionsarm, niedrigviskos und somit gut verarbeitbar und zeigt auch unter ungünstigen Aushärtungsbedingungen kaum Blushing-bedingte Fehler. Dabei härtet sie auch bei verhältnismässig tiefen Temperaturen, beispielsweise bei 8 °C, rasch aus und bildet qualitativ hochstehende Kunststoffe von hoher Härte und ebenmässiger, nichtklebriger Oberfläche mit hohem Glanz und einer geringen Vergilbungsneigung.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 U/min) gemessen.

Die **Aminzahl** wurde durch Titration bestimmt (mit 0.1N HClO₄ in Essigsäure gegen Kristallviolett).

### Verwendete Substanzen enthaltend Amine der Formel (I):

### Cardolite^{®} GX-6013:

Phenalkamin-Härter von Cardolite mit AHEW 180 g/mol enthaltend 20 bis 30 Gewichts-% Cardanol und ca. 1 Gewichts-% 1,3-Bis(aminomethyl)benzol.

### Verwendete Substanzen enthaltend Amine der Formel (II):

### N-Benzyl-1,2-propandiamin:

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin und Isopropanol entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 63 °C und 0.08 bis 0.09 bar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propan-diamin und N²-Benzyl-1,2-propandiamin im Verhältnis von ca. 2/1 darstellte und eine GC-Reinheit von >97% aufwies.

### Verwendete weitere Substanzen:

- Araldite^{®} GY 250:: Bisphenol-A-Diglycidylether, EEW 187.5 g/Eq (von Huntsman)
- Araldite^{®} DY-E:: Monoglycidylether von C₁₂- bis C₁₄-Alkoholen, EEW 290 g/Eq (von Huntsman)
- EP-Addukt 1:: Umsetzungsprodukt aus 1,5-Diamino-2-methylpentan und Araldite^{®} DY-K, hergestellt wie nachfolgend beschrieben, AHEW 106.5 g/Eq
- EP-Addukt 2:: Umsetzungsprodukt aus 1,2-Propylendiamin und Araldite^{®} DY-K, hergestellt wie nachfolgend beschrieben, AHEW 90.0 g/Eq
- Araldite^{®} DY-K:: Kresylglycidylether, EEW 182 g/Eq (von Huntsman)
- Gaskamine^{®} 240:: Styrolisiertes 1,3-Bis(aminomethyl)benzol, AHEW 103 g/Eq (von Mitsubishi Gas Chemical)
- MXDA:: 1,3-Bis(aminomethyl)benzol, AHEW 34 g/Eq (von Mitsubishi Gas Chemical)
- IPDA:: 3-Aminomethyl-3,5,5-trimethylcyclohexylamin, AHEW 42.6 g/Eq (Vestamin^{®} IPD von Evonik)
- TMD: 2,2(4),4-Trimethylhexamethylendiamin, AHEW 39.6 g/Eq (Vestamin^{®} TMD von Evonik)
- 1,3-BAC: 1,3-Bis(aminomethyl)cyclohexan, AHEW 35.5 g/Eq (von Mitsubishi Gas Chemical)
- MCDA:: 2-Methylcyclohexan-1,3(5)-diamin, AHEW 32 g/Eq (Baxxodur^{®} EC 210 von BASF)

Das **EP-Addukt 1** wurde hergestellt, indem 4.65 kg 1,5-Diamino-2-methylpen-tan (Dytek^{®} A von Invista) unter Stickstoffatmosphäre vorgelegt, auf 70 °C erwärmt und dann unter gutem Rühren langsam mit 1.83 kg Araldite^{®} DY-K versetzt wurde, wobei die Temperatur der Reaktionsmischung 70 bis 80 °C betrug. Nach 1 Stunde bei 80°C wurde die Reaktionsmischung abgekühlt und 1,5-Diamino-2-methylpentan und weitere flüchtige Bestandteile destillativ mittels Dünnschichtverdampfer (0.5-1 mbar, Manteltemperatur 160 °C) entfernt.

Das **EP-Addukt 2** wurde hergestellt, indem 4.15 kg 1,2-Propylendiamin unter Stickstoffatmosphäre vorgelegt, auf 70 °C erwärmt und dann unter gutem Rühren langsam mit 2.93 kg Araldite^{®} DY-K versetzt wurde, wobei die Temperatur der Reaktionsmischung 70 bis 80 °C betrug. Nach 1 Stunde bei 80°C wurde die Reaktionsmischung abgekühlt und 1,2-Propylendiamin und weitere flüchtige Bestandteile destillativ mittels Dünnschichtverdampfer (0.5-1 mbar, Manteltemperatur 115 °C) entfernt.

### Herstellung von Härtern und Epoxidharz-Zusammensetzungen:

Für jedes Beispiel wurden die in der Tabelle 1 oder 2 angegebenen Inhaltsstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.
Ebenso wurden die in der Tabelle 1 oder 2 angegebenen Inhaltsstoffe der Harz-Komponente verarbeitet und aufbewahrt. Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C bestimmt (**"Viskosität (10')**).
Ein erster Film wurde in einer Schichtdicke von 500 µm auf eine Glasplatte aufgezogen und dieser im Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.
Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 14 Tagen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl Markierungen angegeben, die im Film durch das feuchte Schwämmchen und/ oder den aufgesetzten Deckel sichtbar waren. An den so ausgehärteten Filmen wurde wiederum die Königshärte bestimmt, jeweils nach 7 Tagen bei 8 °C und 80 % relativer Feuchtigkeit ("Königshärte (7d 8°/80%)"), dann nach weiteren 2 Tagen im NK ("Königshärte (+2d NK)"), 7 Tagen im NK ("Königshärte (+7d NK)") und 14d im NK ("Königshärte (+14d NK)").
Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet (**Q-Sun (72h)**). Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. Ein hoher ΔE-Wert steht dabei für eine grossen Farbunterschied bzw. eine starke Vergilbung.
Die Resultate sind in den Tabellen 1 und 2 angegeben.

Bei den Epoxidharz-Zusammensetzungen ***EZ-1*** bis ***EZ-3*** handelt es sich um erfindungsgemässe Beispiele. Bei den Epoxidharz-Zusammensetzungen ***Ref-1*** bis ***Ref-7*** handelt es sich um Vergleichsbeispiele.

**Tabelle 1: Zusammensetzung und Eigenschaften von EZ-1 bis EZ-3 und Ref-1.**

| **Beispiel** | | ***EZ-1*** | ***EZ-2*** | ***EZ-3*** | ***Ref-1*** |
|---|---|---|---|---|---|
| **Harz-Komponente:** | | | | | |
| | Araldite^{®} GY-250 | 167.2 | 167.2 | 167.2 | 167.2 |
| | Araldite^{®} DY-E | 31.8 | 31.8 | 31.8 | 31.8 |
| **Härter-Komponente:** | | | | | |
| Cardolite^{®} GX-6013 | | 90.0 | 45.0 | 45.0 | 180.0 |
| N-Benzyl-1,2-propandiamin | | 27.4 | 27.4 | 27.4 | - |
| EP-Addukt 1 | | - | 26.6 | - | - |
| EP-Addukt 2 | | - | - | 22.5 | - |
| Viskosität (10') [Pa·s] | | 1.3 | 1.0 | 1.1 | 4.4 |
| Königshärte [s] | (1d NK) | 76 | 63 | 66 | 91 |
| | (2d NK) | 120 | 116 | 119 | 118 |
| | (4d NK) | 141 | 137 | 148 | 132 |
| | (7d NK) | 154 | 153 | 164 | 139 |
| | (14d NK) | 162 | 169 | 181 | 133 |
| Aspekt (NK) | | schön | schön | schön | schön |
| Q-Sun (72h) ΔE | | 30 | 26 | 27 | 47 |
| Königshärte [s] | (7d 8°/80%) | 56 | 53 | 59 | 78 |
| | (+2d NK) | 119 | 125 | 134 | 122 |
| | (+7d NK) | 125 | 143 | 144 | 137 |
| | (+14d NK) | 161 | 161 | 174 | 143 |
| Aspekt (8°/80%) | | schön | schön | schön | schön |
| Anzahl Markierungen | | 1 | 1 | 1 | keine |

**Tabelle 2: Zusammensetzung und Eigenschaften von Ref-2 bis Ref-7.**

| **Beispiel** | | ***Ref***-***2*** | ***Ref***-***3*** | ***Ref***-***4*** | ***Ref***-***5*** | ***Ref***-***6*** | ***Ref***-***7*** |
|---|---|---|---|---|---|---|---|
| **Harz-Komponente:** | | | | | | | |
| Araldite^{®} GY-250 | | 167.2 | 167.2 | 167.2 | 167.2 | 167.2 | 167.2 |
| Araldite^{®} DY-E | | 31.8 | 31.8 | 31.8 | 31.8 | 31.8 | 31.8 |
| **Härter-Komponente:** | | | | | | | |
| Cardolite^{®} GX-6013 | | 117.0 | 90.0 | 90.0 | 90.0 | 90.0 | 90.0 |
| Gaskamine^{®} 240 | | 36.1 | - | - | - | - | - |
| | MXDA | - | 17.0 | - | - | - | - |
| | IPDA | - | - | 21.3 | - | - | - |
| | TMD | - | - | - | 19.8 | - | - |
| | 1,3-BAC | - | - | - | - | 17.8 | - |
| | MCDA | - | - | - | - | - | 16.0 |
| Viskosität (10') [Pa·s] | | 2.4 | 2.2 | 2.6 | 2.1 | 2.5 | 2.1 |
| Königshärte [s] | (1d NK) | 66 | 109 | 105 | 98 | 120 | 101 |
| | (2d NK) | 99 | 129 | 140 | 129 | 144 | 143 |
| | (4d NK) | 120 | 144 | 154 | 134 | 150 | 160 |
| | (7d NK) | 132 | 147 | 167 | 140 | 168 | 168 |
| | (14d NK) | 140 | 151 | 165 | 148 | 157 | 167 |
| Aspekt (NK) | | schön | matt-trüb | schön | schön | leichte Zeichn. | schön |
| Q-Sun (72h) ΔE | | 34 | 26 | 30 | 33 | 29 | 26 |
| Königshärte [s] | (7d 8°/80%) | 53 | 87 | 83 | 57 | 80 | 74 |
| | (+2d NK) | 95 | 106 | 94 | 74 | 111 | 109 |
| | (+7d NK) | 99 | 129 | 140 | 78 | 119 | 122 |
| | (+14d NK) | 132 | 129 | 147 | 99 | 139 | 144 |
| Aspekt (8°/80%) | | schön | matt-trüb | matt | matt | leicht matt | schön |
| Anzahl Markierungen | | 1 | 2 | 3 | 1 | 1 | 3 |

## Patentansprüche

1. Härter für Epoxidharze enthaltend
- mindestens ein Amin der Formel (I), 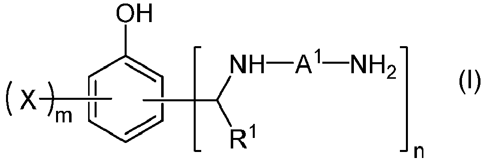 wobei
A¹ für einen Alkylen-Rest mit 2 bis 15 C-Atomen, welcher gegebenenfalls Cycloalkyl- oder Aryl-Ringe aufweist und gegebenenfalls Ether-Sauerstoff oder Amin-Stickstoff enthält und welcher nicht 1,2-Propylen ist, steht,
R¹ für einen Wasserstoff-Rest oder Alkyl-Rest mit 1 bis 8 C-Atomen oder Phenyl-Rest steht,
X für gleiche oder verschiedene Reste ausgewählt aus der Gruppe bestehend aus Hydroxyl, Alkyl, Alkenyl und Alkoxy mit jeweils 1 bis 18 C-Atomen, welche gegebenenfalls Ether- oder Hydroxyl-Sauerstoff oder Amin-Stickstoff enthalten, steht,
m für 0 oder 1 oder 2 steht, und
n für 1 oder 2 oder 3 steht; und
- mindestens ein Amin der Formel (II), 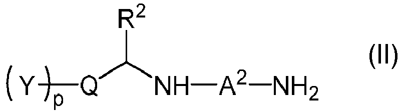 wobei
A² für einen Alkylen-Rest ausgewählt aus 1,2-Ethylen und 1,2-Propylen steht,
R² für einen Wasserstoff- oder Methyl- oder Phenyl-Rest steht,
Q für einen fünf-, sechs- oder siebengliedrigen, im Ring gegebenenfalls ein Sauerstoff-, Schwefel- oder Stickstoffatom aufweisenden Cycloalkyl- oder Aryl-Rest mit 4 bis 7 C-Atomen steht,
Y für gleiche oder verschiedene Reste ausgewählt aus der Gruppe bestehend aus Alkyl, Alkoxy und Dialkylamino mit jeweils 1 bis 18 C-Atomen steht, und
p für 0 oder 1 oder 2 oder 3 steht.

2. Härter gemäss Anspruch 1, **dadurch gekennzeichnet, dass** A¹ für gleiche oder verschiedene Reste ausgewählt aus der Gruppe bestehend aus 1,2-Ethylen, 1,3-Propylen, 2-Methyl-1,5-pentylen, 1,6-Hexylen, 2,2(4),4-Trimethyl-1,6-hexylen, 1,3-Cyclohexylen-bis(methylen), 1,3-Phenylen-bis-(methylen), (1,5,5-Trimethylcyclohexan-1-yl)methan-1,3, 3-Aza-1,5-pentylen, 3,6-Diaza-1,8-octylen, 3,6,9-Triaza-1,11-undecylen, 4-Aza-1,7-heptylen, 3-Aza-1,6-hexylen, 4,7-Diaza-1,10-decylen und 7-Aza-1,13-tridecylen steht.

3. Härter gemäss einem der Ansprüche 1 oder 2, **dadurch gekennzeichnet, dass** X ausgewählt ist aus der Gruppe bestehend aus Hydroxy, Methyl, Methoxy, tert.Butyl, Nonyl, Dodecyl, Pentadeca-8-enyl, Pentadeca-8,11-dienyl, Pentadeca-8,11,14-trienyl, N,N-Dimethylaminomethyl, N,N-Diethylaminomethyl, N-Methyl-N-ethylaminomethyl, N-Methyl-N-butylaminomethyl, N,N-Bis(hydroxyethyl)aminomethyl, N-Methyl-N-hydroxyethylaminomethyl, N-Ethyl-N-hydroxyethylaminomethyl, N-Butyl-N-hydroxyethylaminomethyl, N-Pyrrolidinylmethyl, N-Piperidinylmethyl, N-Morpholinylmethyl, (3-(N,N-Dimethylamino)propyl)aminomethyl oder (3-(3-(N,N-Dimethylamino)propyl)aminopropyl)aminomethyl.

4. Härter gemäss einem der Ansprüche 1 bis 3, **dadurch gekennzeichnet, dass** m für 1 und X für Pentadeca-8-enyl oder Pentadeca-8,11-dienyl oder Pentadeca-8,11,14-trienyl stehen, wobei der Rest X in 3-Stellung und die übrigen Reste in 2- und/oder 4- und/oder 6-Stellung bezogen auf das phenolische OH stehen.

5. Härter gemäss einem der Ansprüche 1 bis 4, **dadurch gekennzeichnet, dass** das Amin der Formel (I) eingesetzt wird in Form eines Reaktionsprodukts aus einer Umsetzung ausgewählt aus der Gruppe bestehend aus
(i) Umsetzung von
- mindestens einem primären Diamin der Formel (III),
NH₂-A¹-NH₂ (III)
- mindestens einem Aldehyd der Formel (IV) 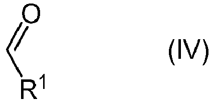
- und mindestens einer Phenol-Verbindung der Formel (V) 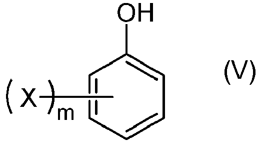 unter Abspaltung von Wasser,
(ii) Umsetzung von
- mindestens einem primären Diamin der Formel (III) und
- mindestens einer Mannich-Base der Formel (VI) 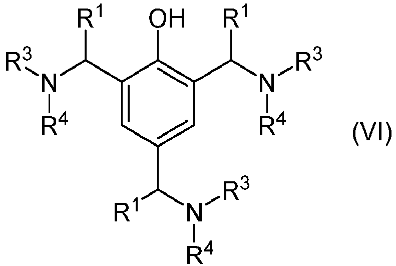 unter Abspaltung von Amin der Formel R³-NH-R⁴ und
(iii) Umsetzung von
- mindestens einem primären Diamin der Formel (III),
- mindestens einem Aldehyd oder Keton der Formel (VII) 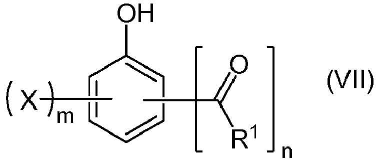
- und Wasserstoff unter Abspaltung von Wasser.

6. Härter gemäss einem der Ansprüche 1 bis 5, **dadurch gekennzeichnet, dass** A² für 1,2-Propylen steht.

7. Härter gemäss einem der Ansprüche 1 bis 6, **dadurch gekennzeichnet, dass** Q für einen gegebenenfalls mit Y substituierten Phenyl-Rest steht.

8. Härter gemäss einem der Ansprüche 1 bis 7, **dadurch gekennzeichnet, dass** A² für 1,2-Propylen, R² für einen Wasserstoff-Rest, Q für einen Phenyl-Rest und p für 0 stehen.

9. Härter gemäss einem der Ansprüche 1 bis 8, **dadurch gekennzeichnet, dass** das Amin der Formel (II) eingesetzt wird in Form eines Reaktionsprodukts aus der reduktiven Alkylierung von 1,2-Ethylendiamin oder 1,2-Propylendiamin mit einem Aldehyd oder Keton der Formel (VIII) und Wasserstoff.

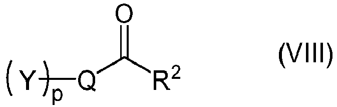

10. Härter gemäss einem der Ansprüche 1 bis 9, **dadurch gekennzeichnet, dass** zusätzlich mindestens ein weiteres Amin, das nicht der Formel (I) oder (II) entspricht, und/oder mindestens ein Beschleuniger enthalten ist.

11. Härter gemäss einem der Ansprüche 1 bis 10, **dadurch gekennzeichnet, dass** soviel an Amin der Formel (I) enthalten ist, dass 15 bis 80% der gesamten Aminwasserstoffe des Härters vom Amin der Formel (I) stammen.

12. Härter gemäss einem der Ansprüche 1 bis 11, **dadurch gekennzeichnet, dass** soviel an Amin der Formel (II) enthalten ist, dass 20 bis 70% der gesamten Aminwasserstoffe des Härters vom Amin der Formel (II) stammen.

13. Epoxidharz-Zusammensetzung umfassend
- eine Harz-Komponente enthaltend mindestens ein Epoxidharz und
- eine Härter-Komponente enthaltend einen Härter gemäss einem der Ansprüche 1 bis 12.

14. Beschichtung enthaltend eine Epoxidharz-Zusammensetzung wie in Anspruch 13 beschrieben.

15. Ausgehärtete Zusammensetzung erhalten aus der Aushärtung einer Epoxidharz-Zusammensetzung gemäss Anspruch 13 oder einer Beschichtung gemäss Anspruch 14.
